# EUROPEAN PATENT SPECIFICATION

(11) **EP 1 992 470 B1**
(45) Date of publication and mention of the grant of the patent: **10.08.2011**
(21) Application number: 07108376.0
(22) Date of filing: 16.05.2007
(51) Int. Cl.: B29C 45/16, B65D 1/24

(54) **Injection moulded handgrip**
Spritzgusshandgriff
Poignée moulée par injection

(43) Date of publication of application: 19.11.2008
(73) Proprietor: D.W. PLASTICS N.V., 3740 Bilzen (BE)
(72) Inventor: Willems, Gert Louis Clement, 3060 Bertem (BE); Brouwers, Werner Christiaan Martin, 3990 Kleine-Brogel (BE)
(74) Representative: Benech, Frédéric

(56) References cited:
- EP-A- 1 000 865
- EP-A- 1 642 698
- WO-A-98/47775
- DE-A1- 10 239 319

## Description

### Background

The present invention relates to an injection moulded handgrip, in particular for a crate, and a method for producing an injection moulded crate, in particular a bottle crate.

Forming a handgrip or handle on an injection moulded article, in particular a crate such as for instance a bottle crate, is a problem. Usually, these handgrips are made in a wall of such a crate. These handles are usually formed as reach-through openings in one or more of the walls. Other types of handles or handgrips for crates are for instance disclose in EP-1.431.020 and EP-1.510.464 of applicant.

In order to have a high production speed, the walls of a crate can be 3 mm at a maximum. It is desired to reduce the wall thickness in order to increase production speed. This thickness, however, is often too thin for providing a handgrip which allows a comfortable use, which is ridged, and which does not break nor bend. In a bottle crate, this is particularly important as they carry a lot of weight, and must be able to resist rough handling.

There are many known techniques for forming a handgrip on a crate, for instance a bottle crate, in particular an handgrip of handle integrally moulded with the remaining crate.

One known technique is to provide transverse ribs on the wall of an article, like a crate, in particular on the inside surface of the wall in order to form strips, fins, lamella or slats. This technique is disclosed in EP-260698, for instance. In that way, the wall thickness can remain below 3 mm, and the strength is not compromised. The handgrip can still be ergonomic. One handgrip cannot have several different colours, however. It has the same colour as the remaining article. EP-1642698 discloses such a handgrip having an overmoulded part, in accordance with the preamble of claim 1 and a method in accordance with the preamble of claim 9.

Another known technique is to use "duplex" technology in combination with gas injection. With this technology, again it is not possible to obtain a handgrip having several colours. Furthermore, the boundary lines or joint of the slide remains visible in the handgrip, and the wall thickness of the duplex is difficult to control. The connection of the withdrawn volume with the remaining crate is inferior as this is a cold welding.

The use of air moulding is another known technique. In this technique, air is blown in into the lower side of the handgrip in order to provide a thicker and rounder grip. This is for instance described in US-5.395.010. This technique, however, increases the strength of the handgrips only slightly. Furthermore, it does not make it possible to use various colours or different materials.

Another known technique is using soft touch overmoulding, using a thermoplastic elastomeric material, moulded over a handgrip with lamella. This does not add any strength or rigidity to the handgrip. It does provide an ergonomic handgrip and allows to use a different colour. An example of this technique is described in EP-1.431.193 of applicant.

A handgrip, in particular suited for a bottle crate, which is strong and ridged, ergonomic in use, and which can have a colour which differs from the rest of the crate, still has room for improvement.

### Summary of the invention

The inventions seeks to improve or provide alternatives for the known handgrips, in particular handgrips used in crates.

According to a first aspect of the invention this is realized with an injection moulded handgrip according to claim 1.

This new handgrip has many advantages. The handgrip can have two different colours. Furthermore, the strength and rigidity of the handgrip increases as both materials contribute to the strength. This makes it possible to make wider handgrips which can still carry a considerable load.

The invention further provides a method according to claim 9.

The deformation of the handgrip is reduced because of the use of material with a higher MFI.

The article is easier to recycle as both materials belong to the same family of materials, i.e. polyalkene or polyolefine polymers.

Both materials, in particular HDPE, are cheap and readily available.

The use of a second material with a higher MFI allows a smaller wall thickness and induced lower stress into the handgrip. This reduces deformation during use.

The term "Melt Flow Index" (MFI) as used in this application is defined as the amount, in grams, of a thermoplastic resin which can be forced through an extrusion rheometer orifice of 0.0825 inch diameter when subjected to a force of 2160 grams in ten minutes at 190°C.

The invention further relates to an injection moulded crate provided with the handgrip of the invention.

Further embodiments of the invention are described in the dependent claims and in the detailed description of embodiments.

The invention further relates to an injection moulded crate comprising one or more of the characterising features described in the description and/or shown in the attached drawings.

The invention further relates to method for producing an injection moulded crate comprising one or more of the characterising features described in the description and/or shown in the attached drawings.

The various aspects discussed in this patent can be combined in order to provide additional advantages effects. The embodiments or features can also for the basis of one or more divisional applications.

### Description of the drawings

The invention will be further elucidated referring to an preferred embodiment shown in the drawing wherein shown in:
Fig. 1 a bottle crate;
fig. 2 a detail of the handgrip of the bottle crate of fig. 1, seen from the inside of the crate;
fig. 3a a first vertical cross section through the handgrip of figure 2;
fig. 3b a second vertical cross section through the handgrip of figure 2, and
fig. 3c a horizontal cross section through the handgrip of fig. 2.

### Detailed description of embodiments

In the figures an example of a handgrip of the invention is shown in a preferred embodiment, i.e. a bottle crate. In such a bottle crate, these handgrips must be able to withstand large loads. As these handgrips are used by consumers, they must be ergonomic in use and have an appealing appearance.

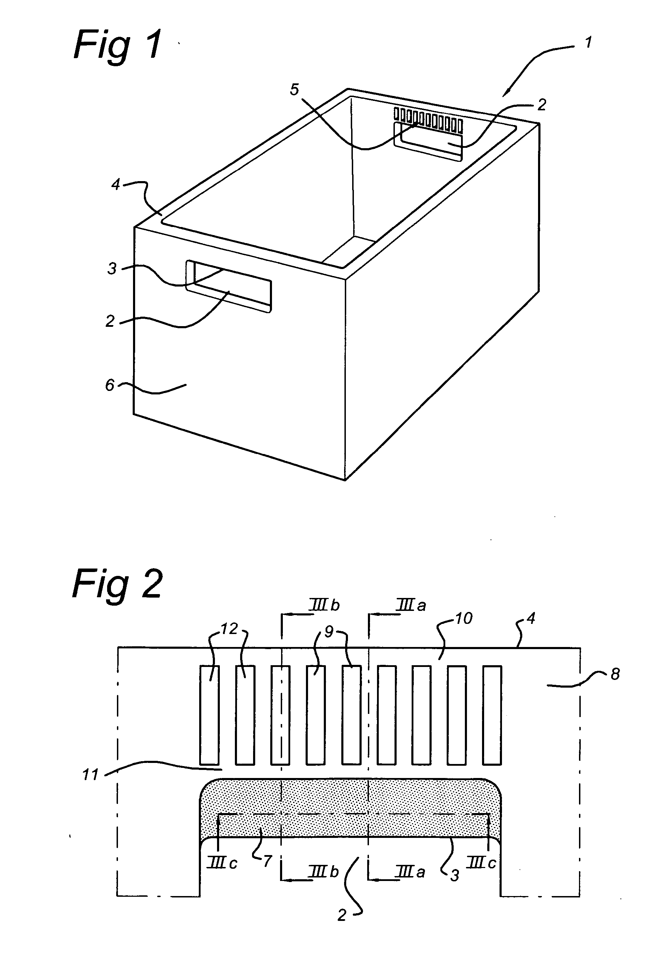

Fig. 1 shows a perspective view of a bottle crate 1 having handgrips 2 in its two opposite end walls 6. These handgrips can also be (additionally) provided in the large walls. The handgrips 2 are through openings in wall 6. The handgrip 2 has a lower side 3which in use rests on the hands or fingers of a user, an upper side 4 and an inner side 5 directed towards the inside of the crate. This inner side 5 in this embodiment has reinforcing lamellae.

In fig. 2, an enlarged view of the part indicated in fig. 1 is shown. The handgrip 2 has a first handgrip part 8 which is here moulded from the same plastic as the rest of crate 2 as an integral part thereof. The handgrip 2 here has a vertical wall 12 which usually is in the same plane as the wall 6. The upper side 4 of the handgrip is formed by horizontal wall 10. Spaced apart from this horizontal wall 10, handgrip 2 here has another horizontal wall 11. The space defined by walls 10, 11 and 12 is partially filled with a plurality of parallel lamellae 9 with spaces 12 between them.

The lower part of the handgrip 5 comprises a second handgrip part 7 which is usually moulded from a different colour plastic. This part is moulded over the first handgrip part 8 in a separate moulding step, often in a second mould.

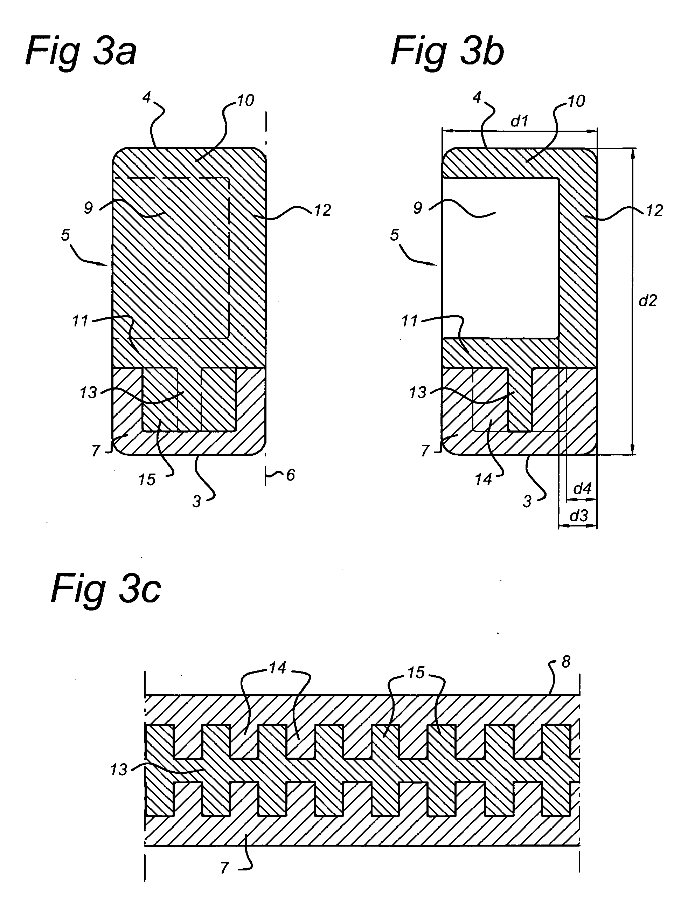

In fig. 2, three cross sections are indicated which are shown in figs 3a-3c.

Fig. 3a shows a vertical cross section through handgrip 5 which runs through a lamella 9. It shows that the first handgrip part 8 here has a further, second vertical wall 13 running through a plurality of second, parallel lamellae 15. The second vertical wall 13 and lamellae 15 will have a thickness of 1.5-3 mm and the lamellae 15 will be spaced apart 1.5-3 mm.

In fig. 3b, a vertical cross section running next to a lamella 9 (and 15) is shown. This cross section shows that in this embodiment, the plastic of the second handgrip part 7 fills the spaces between the lamellae 15, thus forming lamellae 14 of the second handgrip part 7. The second handgrip part 7 has a wall which envelopes the lower side of the first handgrip part 8. The wall thickness will be 1-3 mm. This wall fits or butts up to wall 11 of the first handgrip part 8. The outside of the second handgrip part 7 here is in plane with wall 6.

Fig. 3c is a horizontal cross section through the lower part of the handgrip 2, through the second handgrip part.

The handgrip 2 usually has a width d1 of 6-20 mm, a height of 20-50 mm. The thickness d4 of the wall 12 usually is between 1-3 mm.

The first handgrip part 8 and the rest of the crate usually is moulded from HDPE, usually having an MFI of 8. Tests have shown that the use of the same HDPE leads to delamination of both parts under load due to stress cracking. Use of HDPE with an MFI of 30, however, does not show these detrimental effects, but results in a good bonding, and an increase in strength of the handgrip 2. Furthermore, a different colour can be used, which also provides the possibility of creating new aesthetic effects.

In the embodiments shown, the second handgrip part 7 only envelopes the lower part of the first handgrip part. It is also considered, however, to cover larger part of the first handgrip part. The second handgrip part may cover for instance also the lamellae 9, which the become included in or enveloped by the second handgrip part 7. In particular when the lamellae of the first and second handgrip part fuse due to the moulding process, i.e. when the lamellae of the second handgrip part completely fill the space between the lamellae of the first handgrip part, a significant increase in strength and rigidity is observed, and no delamination takes place. The material at both surfaced thus seems to fuse.

## Claims

1. Injection moulded handgrip of an article for carrying said article, in particular a crate, said handgrip having a lower part usually resting on the fingers of a person when carrying the article, said handgrip comprising:
- a first handgrip part, injection moulded from a first thermoplastic polyalkene material, having a first wall part extending in longitudinal direction of said handgrip and a plurality of closely spaced first lamellae extending in transverse direction;
- a second handgrip part, injection moulded over said first handgrip part, said second handgrip part having a plurality of second lamellae extending between the first lamellae and connecting to an outer wall enclosing at least the lower part of the first handgrip part, **characterized in that** the first thermoplastic polyalkene has a MFI of 8, that the second handgrip part is from a second thermoplastic polyalkene having a MFI above the MFI of the first material, and that the second handgrip part has a wall thickness of 0,5-3mm.

2. Injection moulded handgrip according to claim 1, wherein said MFI of said second 20 material is 30.

3. Injection moulded handgrip according to claim 1 of 2, wherein said first handgrip part has a wall thickness of less than 3.0 mm.

4. Injection moulded handgrip according to any one of the preceding claims, wherein said first lamellae are 0.5-3.0 mm spaced apart, in particular, the first lamellae are regularly spaced.

5. Injection moulded handgrip according to any one of the preceding claims, wherein 30 the second thermoplastic polyalkene of said second handgrip part fills the spaces between said first lamellae with its second lamellae.

6. Injection moulded handgrip according to any one of the preceding claims, wherein said first thermoplastic polyalkene is HDPE.

7. Injection moulded handgrip according to any one of the preceding claims, wherein said first and second material belong to the same family of materials.

8. Injection moulded crate comprising a bottom and interconnected walls, at least one of said walls having an injection moulded handgrip according to claim 1, wherein said first handgrip part is integrally formed with said injection moulded crate.

9. Method for producing an injection moulded crate, in particular a bottle crate, comprising the steps of:
- injecting a first thermoplastic polyalkene material in an injection mould for forming a first crate section having a bottom and walls connecting to the bottom and to one another; and having a first handgrip part having a first wall part extending in longitudinal direction of said handgrip and a plurality of closely spaced first lamellae extending in transverse direction;
- positioning said first crate section in a further injection mould in which at least one mould wall and said first handgrip part form an injection moulding cavity;
- Injecting a second material in said injection moulding cavity, said second material covering the lower part of said first handgrip part and filling the spaced between said lamellae, **characterized in that** the first thermoplastic polyalkene material has a MFI of 8 and that the second material is a thermoplastic polyalkene having a MFI of 30.

10. Method according to claim 9, wherein the first thermoplastic polyalkene material is HDPE.

## Patentansprüche

1. Spritzgusshandgriff für einen Artikel zum Tragen dieses Artikels, insbesondere eine Kiste,
wobei der Handgriff einen unteren Teil aufweist, der üblicherweise auf den Fingern einer Person liegt, wenn der Artikel getragen wird, wobei der Handgriff umfasst:
- einen ersten Handgriffteil, der aus einem ersten thermoplastischen Polyalkylen-Material spritzgegossen ist, mit einem ersten Wandteil, der sich in Längsrichtung des Handgriffs erstreckt, und einer Vielzahl von nahe benachbarten ersten Lamellen, die sich quer erstrecken;
- einen zweiten Handgriffteil, der über den ersten Handgriffteil spritzgegossen ist, wobei der zweite Handgriffteil eine Vielzahl an zweiten Lamellen hat, die sich zwischen den ersten Lamellen erstrecken und die mit einer äußeren Wand verbunden sind, die wenigstens den unteren Teil des ersten Handgriffteils umschließt,
**dadurch gekennzeichnet,**
**dass** das erste thermoplastische Polyalkylen einen MFI von 8 hat,
**dass** der zweite Handgriffteil aus einem zweiten thermoplastischen Polyalken mit einem MFI der größer als der MFI des ersten Materials ist, hergestellt ist, und
**dass** der zweite Handgriffteil eine Wanddicke von 0,5 bis 3 mm hat.

2. Spritzgusshandgriff nach Anspruch 1,
wobei der MFI des zweiten Materials 30 ist.

3. Spritzgusshandgriff nach Anspruch 1 oder 2,
wobei der erste Handgriffteil eine Wanddicke von weniger 3,0 mm hat.

4. Spritzgusshandgriff nach einem der vorhergehenden Ansprüche,
wobei die ersten Lamellen 0,5 bis 3,0 mm voneinander beabstandet sind, insbesondere sind die ersten Lamellen gleichmäßig voneinander beabstandet.

5. Spritzgusshandgriff nach einem der vorhergehenden Ansprüche,
wobei das zweite thermoplastische Polyalken des zweiten Handgriffteils die Abstände zwischen den ersten Lamellen mit den zweiten Lamellen füllt.

6. Spritzgusshandgriff nach einem der vorhergehenden Ansprüche,
wobei das erste thermoplastische Polyalken HDPE ist.

7. Spritzgusshandgriff nach einem der vorhergehenden Ansprüche,
wobei das erste und zweite Material zu der selben Materialfamilie gehören.

8. Spritzgusskiste umfassend einen Boden und miteinander verbundene Wände,
wobei wenigstens eine der Wände einen Spritzgusshandgriff nach Anspruch 1 aufweist,
wobei der erste Handgriffteil integral mit der spritzgegossenen Kiste gebildet ist.

9. Verfahren zur Herstellung einer spritzgegossenen Kiste, insbesondere einer Flaschenkiste, umfassend die Schritte:
- Einspritzen eines ersten thermoplastischen Polyalkenmaterials in ein Spritzgießwerkzeug für die Ausbildung eines ersten Kistenteils mit einem Boden und Wänden, die mit dem Boden und miteinander verbunden sind; und das einen ersten Handgriffteil mit einem ersten Wandteil, der sich in Längsrichtung des Handteils erstreckt, und eine Vielzahl von nahe benachbarten ersten Lamellen aufweist, die in Querrichtung verlaufen;
- Positionieren des ersten Kistenteils in ein weiteres Spritzgießwerkzeug, in dem wenigstens eine Werkzeugwand und der erste Handgriffteil eine Spritzgießformhöhlung bilden;
- Einspritzen eines zweiten Materials in diese Spritzgießformhöhlung, wobei das zweite Material den unteren Teil des ersten Handgriffteils bedeckt und den Zwischenraum zwischen den Lamellen füllt,
**dadurch gekennzeichnet,**
**dass** das erste thermoplastische Polyalkenmaterial einen MFI von 8 hat und das zweite Material ein thermoplastisches Polyalken mit einem MFI von 30 ist.

10. Verfahren nach Anspruch 9, wobei das erste thermoplastische Polyalken HDPE ist.

## Revendications

1. Poignée moulée par injection d'un article pour transporter ledit article, en particulier une caisse, ladite poignée comportant une partie inférieure reposant d'habitude sur les doigts d'une personne lors du transport de l'article, ladite poignée comprenant :
- une première partie de poignée, moulée par injection à partir d'un premier matériau polyalcène thermoplastique, comportant une première partie de paroi s'étendant dans une direction longitudinale de ladite poignée et une pluralité de premières lamelles espacées de près s'étendant dans une direction transversale ;
- une seconde partie de poignée, moulée par injection par-dessus ladite première partie de poignée, ladite seconde partie de poignée comportant une pluralité de secondes lamelles s'étendant entre les premières lamelles, et reliées à une paroi extérieure enfermant au moins la partie inférieure de la première partie de poignée, **caractérisée en ce que** le premier polyalcène thermoplastique possède un MFI de 8, que la seconde partie de poignée est d'un second polyalcène thermoplastique comportant un MFI supérieur au MFI du premier matériau, et **en ce que** la seconde partie de poignée possède une épaisseur de paroi de 0,5 à 3 mm.

2. Poignée moulée par injection selon la revendication 1, dans laquelle ledit MFI dudit second matériau est 30.

3. Poignée moulée par injection selon la revendication 1 ou 2, dans laquelle ladite première partie de poignée possède une épaisseur de paroi inférieure à 3,0 mm.

4. Poignée moulée par injection selon une quelconque des revendications précédentes, dans laquelle lesdites premières lamelles sont espacées les unes des autres de 0,5 à 3,0 mm, en particulier, les premières lamelles sont régulièrement espacées.

5. Poignée moulée par injection selon une quelconque des revendications précédentes, dans laquelle le second polyalcène thermoplastique de ladite seconde partie de poignée remplit les espaces entre lesdites premières lamelles avec ses secondes lamelles.

6. Poignée moulée par injection selon une quelconque des revendications précédentes, dans laquelle ledit premier polyalcène thermoplastique est du HDPE.

7. Poignée moulée par injection selon une quelconque des revendications précédentes, dans laquelle lesdits premier et second matériaux appartiennent à la même famille de matériau.

8. caisse moulée par injection comprenant un fond et des parois reliées mutuellement, au moins une desdites parois comportant une poignée moulée par injection selon la revendication 1, dans laquelle ladite première partie de poignée est formée d'un seul tenant avec ladite caisse moulée par injection.

9. Procédé pour fabriquer une caisse moulée par injection, en particulier une caisse à bouteilles, comprenant les étapes consistant à :
- injecter un premier matériau polyalcène thermoplastique dans un moule à injection pour former une première section de caisse comportant un fond et des parois reliées au fond et les unes aux autres ; et comportant une première partie de poignée comportant une première partie de paroi s'étendant dans une direction longitudinale de ladite poignée et une pluralité de premières lamelles espacées de près s'étendant dans une direction transversale ;
- positionner ladite première section de caisse dans un moule à injection supplémentaire dans lequel au moins une paroi de moule et ladite première partie de poignée forment une cavité de moulage par injection ;
- injecter un second matériau dans ladite cavité de moulage par injection, ledit second matériau recouvrant la partie inférieure de ladite première partie de poignée et remplissant les espaces entre lesdites lamelles, **caractérisé en ce que** le premier matériau polyalcéne thermoplastique possède un MFI de 8 et que le second matériau est un polyalcène thermoplastique comportant un MFI de 30.

10. Procédé selon la revendication 9, dans lequel le premier matériau polyalcène thermoplastique est HDPE.
